# FASCICULE DE BREVET EUROPEEN

(11) **EP 2 584 197 B1**
(45) Date de publication et mention de la délivrance du brevet: **13.12.2017**
(21) Numéro de dépôt: 12188603.0
(22) Date de dépôt: 16.10.2012
(51) Int. Cl.: F04B 1/04, F04B 1/07, F04B 49/12, B23D 29/00, F01B 1/06, B23D 17/06

(54) **Pompe hydraulique radiale a excentricite et debit variables**
Radiale hydraulische Pumpe mit variabler Exzentrizität und variablem Durchsatz
Radial hydraulic pump with variable eccentricity and flow rate

(30) Priorité: 21.10.2011 FR 1159582
(43) Date de publication de la demande: 24.04.2013
(73) Titulaire: HYDR'AM, 69720 Saint Bonnet de Mure (FR)
(72) Inventeur: Rodrigues, Victor, 69780 Mions (FR)
(74) Mandataire: Cabinet Laurent & Charras

(56) Documents cités:
- EP-A1- 0 122 770
- FR-A- 945 332
- FR-A1- 2 715 095
- JP-A- 2 218 872
- US-A- 2 404 175
- US-A- 3 828 400
- US-A1- 2004 107 828

## Description

### DOMAINE TECHNIQUE

La présente invention à trait à une pompe hydraulique, et plus particulièrement à une pompe hydraulique radiale à excentricité et débit variables, destinée à alimenter un outil hydraulique, du type pince de désincarcération, classiquement mise en oeuvre dans le cadre des accidents de la circulation..

### ART ANTERIEUR

Dans le domaine des outils hydrauliques, il peut être requis des pressions élevées en raison des actions et autres contraintes à exercer. C'est particulièrement vrai dans le cadre des pinces de désincarcération, qui peuvent être amenées à sectionner des profilés ou des structures de dimensions conséquentes. Dans ce cadre, la pression nominale élevée, autorisant le fonctionnement de l'outil au maximum de sa puissance ne constitue par un besoin permanent. Aussi, afin de pouvoir cependant utiliser l'outil dans toute une gamme de pressions, on a proposé la mise en oeuvre de pompes multi-étages, et notamment double -étages, qui permettent de disposer de la pression adaptée tout en permettant un débit du fluide hydraulique, en général suffisant avec l'application envisagée.

Nonobstant la mise en oeuvre de telles pompes multi-étages, l'expérience démontre que le débit peut s'avérer insuffisant, se traduisant par une vitesse limitée de l'actionnement de l'outil sur lequel est branchée ladite pompe. Or, dans le cadre de l'application envisagée, c'est-à-dire dans le cadre de l'actionnement d'outils de découpe notamment, une vitesse plus importante permet d'augmenter l'efficacité desdits outils.

Afin de pallier en partie ces inconvénients, on a proposé d'utiliser des pompes hydrauliques radiales, également dénommées à pistons, à excentricité variable, c'est-à-dire dont la course des pistons de ladite pompe n'est pas constante, mais est susceptible de varier, et ce, dans un souci d'alimenter de manière optimale l'outil hydraulique. Ces pompes hydrauliques permettent de faire varier automatiquement et instantanément le débit de fluide en fonction de la pression régnant dans le circuit hydraulique.

Une telle pompe hydraulique est par exemple décrite dans le document EP 1 090 229. Cette pompe hydraulique comprend un bâti, un arbre de pompe apte à être entraîné en rotation par un moteur, autour d'un axe fixe par rapport au bâti, un manchon excentrique en prise avec l'arbre de pompe et au moins un étage de pistons disposés de manière fixe par rapport au bâti et s'étendant radialement dans des cylindres de pompes définissant des chambres. Le manchon excentrique est monté sur l'arbre de pompe de telle manière qu'il soit bloqué en rotation et déplaçable en translation le long de l'axe de l'arbre de pompe. Par ailleurs, ledit manchon est formé par un corps cylindrique biaisé qui procure avec une face d'enveloppe une face de glissement pour les pistons de pompe. Ainsi, l'excentricité variable est réalisée au moyen d'un élément réglable dans le sens axial et qui se présente sous la forme d'un corps cylindrique en biais.

Le document EP 2 006 544 décrit également une pompe hydraulique à excentricité variable. Ladite pompe hydraulique comprend un bâti, un arbre de pompe apte à être entraîné en rotation par un moteur thermique ou électrique autour d'un axe fixe par rapport au bâti, un manchon excentrique en prise avec l'arbre de pompe et au moins un étage de pistons disposés de manière fixe par rapport au bâti et s'étendant radialement dans des cylindres de pompes définissant des chambres. Le manchon excentrique est guidé le long d'un axe excentrique incliné par rapport à l'axe de l'arbre de pompe, ledit axe excentrique présentant une surface d'enveloppe cylindrique, dont la génératrice est agencée parallèlement à l'axe de l'arbre de pompe, et un ressort s'étendant parallèlement à l'axe excentrique assure le déplacement du manchon excentrique le long de l'axe excentrique en fonction de la charge du circuit aval.

Ces pompes hydrauliques présentent l'inconvénient de soumettre les pistons de la pompe à de fortes charges de sorte qu'il est nécessaire d'adapter de manière complexe et onéreuse les pistons de la pompe.

Par ailleurs, ces pompes hydrauliques ne permettent pas d'atteindre une pression de 700 bars.

Les documents JP 2 218872 et US 2 404 175 décrivent également des pompes hydraulique à excentricité variabble.

### EXPOSE DE L'INVENTION

L'un des buts de l'invention est donc de remédier à ces inconvénients en proposant une pompe hydraulique à excentricité et débit variables, de conception simple et peu onéreuse, permettant de procurer une pression pouvant atteindre et même dépasser 700 bars au niveau d'un outil hydraulique, tel qu'un outil de désincarcération, une cisaille, un écarteur, un vérin, etc...

A cet effet, et conformément à l'invention, il est proposé une pompe radiale hydraulique comprenant au moins un bâti, un arbre de pompe apte à être entraîné en rotation par un moteur thermique, électrique ou hydraulique autour d'un axe fixe par rapport au bâti, un manchon excentrique en prise avec l'arbre de pompe et au moins un étage de pistons disposés de manière fixe par rapport au bâti et s'étendant radialement dans des cylindres de pompes définissant des chambres.

Selon l'invention, cette pompe comporte au moins un poussoir s'étendant dans un logement pratiqué dans le manchon excentrique, et coopérant avec au moins un moyen élastique, dont l'élasticité varie en fonction de la charge du circuit aval débouchant au niveau des chambres de pompes, ledit poussoir actionnant des moyens diminuant la course des pistons.

Selon un premier mode de réalisation de la pompe de l'invention, le manchon excentrique comporte une gorge radiale formant une rainure radiale recevant un coulisseau qui comprend d'une part un évidement cylindrique radial dans lequel s'étendent le moyen élastique et le poussoir, ledit évidement cylindrique étant fermé par une bague intérieure d'un roulement à billes solidaire du bâti, et d'autre part, un mandrin dont l'axe longitudinal est excentré par rapport à celui de l'arbre de pompe.

Par ailleurs, ledit poussoir consiste en une bille maintenue en contact permanent avec la bague intérieure du roulement à billes par un piston s'étendant dans l'évidement radial du coulisseau et coopérant avec le moyen élastique.

De plus, la pompe comporte un roulement à billes monté concentriquement sur le mandrin du coulisseau et dont la bague extérieure est en appui contre les pistons radiaux de la pompe.

Selon un second mode de réalisation de la pompe selon l'invention, le manchon excentrique comporte un évidement cylindrique sensiblement radial, dans lequel s'étendent le moyen élastique et le poussoir qui fait saillie dans une gorge radiale excentrique et qui prend appui sur la tête d'un pivot articulée sur le bâti au moyen d'une rotule, ledit pivot coopérant avec une bague dite excentrée dont la génératrice extérieure prend appui sur les pistons radiaux de la pompe.

Ledit poussoir consiste de préférence en un doigt sensiblement cylindrique.

Par ailleurs, l'évidement cylindrique forme un angle α avec l'axe radial de l'arbre de pompe, ledit angle α étant de préférence compris entre 5 et 45°.

De plus, la rotule est constituée d'un siège solidaire du bâti et comprenant un évidement hémisphérique dans lequel prend appui une tête sphérique solidaire de l'extrémité distale du pivot, ledit pivot comportant à proximité de son extrémité distale une partie sphérique prenant appui sur la génératrice intérieure de la bague excentrée qui prend appui sur le siège.

Ledit moyen élastique est avantageusement constitué d'un ressort hélicoïdal.

### DESCRIPTION SOMMAIRE DES FIGURES

D'autres avantages et caractéristiques de la pompe hydraulique radiale à excentricité variable selon l'invention ressortiront mieux de la description qui suit, de plusieurs variantes d'exécution, données à titre d'exemple non limitatifs, en référence aux figures annexés sur lesquels :
- la figure 1 est une représentation schématique en coupe longitudinale de la pompe hydraulique radiale à excentricité variable selon une première forme de réalisation de l'invention,
- la figure 2 est une vue schématique en perspective du manchon excentrique et du coulisseau de la pompe de la figure 1,
- la figure 3 est une vue schématique en perspective du manchon excentrique et du coulisseau de la pompe de la figure 1,
- les figures 4A et 4B sont des représentations schématiques en coupe longitudinale de la pompe de la figure 1 en position d'excentration minimale et respectivement en position d'excentration maximale,
- les figures 5A et 5B sont des représentations schématiques dans le plan frontal des positions des pistons radiaux de la pompe de la figure 1, respectivement en position d'excentration minimale et en position d'excentration maximale,
- la figure 6 est une vue schématique en coupe longitudinale d'une seconde forme de réalisation de la pompe de l'invention en position d'excentricité maximale,
- la figure 7 est une vue analogue à la figure 6, en position d'excentricité minimale,
- les figures 8A et 8B sont des représentations schématiques dans le plan frontal des positions des pistons radiaux de la pompe selon les figures 6 et 7, respectivement en position d'excentration minimale et en position d'excentration maximale.

### DESCRIPTION DETAILLEE DE L'INVENTION

Par souci de clarté, dans la suite de la description, les mêmes éléments ont été désignés par les mêmes références au sein des différentes figures. De plus, les diverses vues en coupe ne sont pas nécessairement tracées à l'échelle.

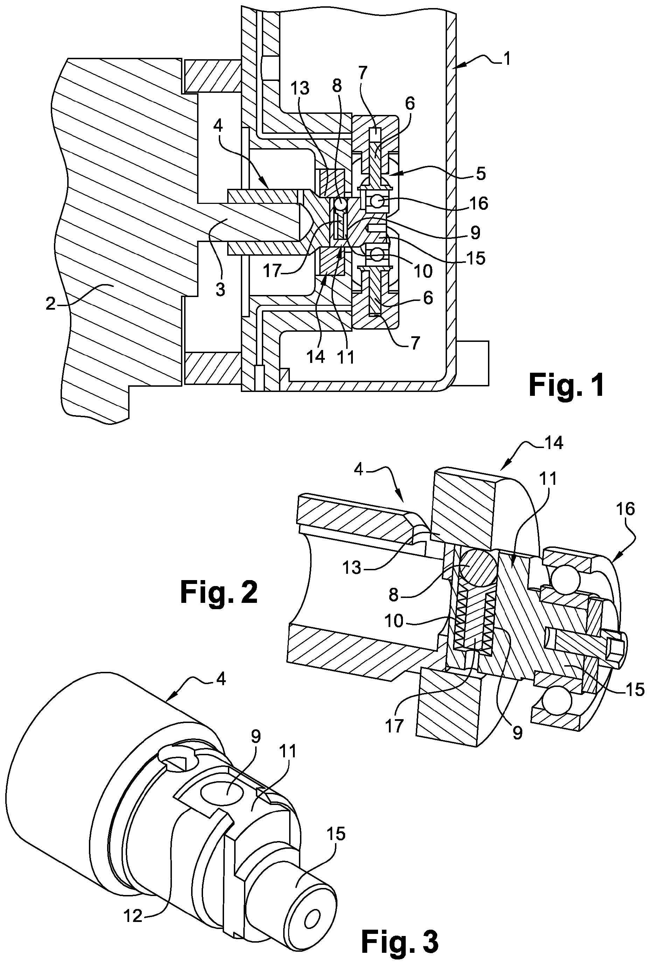

En référence à la figure 1, la pompe hydraulique selon un premier mode de réalisation de l'invention comprend :
- un bâti (1) auquel est solidarisé un moteur (2) thermique, électrique ou hydraulique, comprenant un arbre de sortie dit arbre de pompe (3) entraîné en rotation autour d'un axe fixe par rapport au bâti (1),
- un manchon excentrique (4) en prise avec l'arbre de pompe (3) et
- un étage (5) de pistons (6) disposés de manière fixe par rapport au bâti (1), chaque piston (6) s'étendant radialement dans un cylindre de pompe (7) définissant une chambre.

Ledit manchon excentrique (4), en référence aux figures 1 à 3, comporte un poussoir (8) s'étendant sensiblement radialement dans un évidement (9) pratiqué radialement dans le manchon excentrique (4), et coopérant avec un moyen élastique (10) dont l'élasticité varie en fonction de la charge du circuit aval de la pompe, ledit poussoir (8) actionnant des moyens faisant varier la course des pistons (6).

Lesdits moyens consistent dans un coulisseau (11) apte à se déplacer radialement dans une gorge radiale (12), formant une glissière radiale, pratiquée dans le manchon excentrique (4).

Ce coulisseau (11) comprend :
- d'une part l'évidement cylindrique radial (9) dans lequel s'étendent le moyen élastique (10) et le poussoir (8), ledit évidement cylindrique (9) étant fermé par une bague intérieure (13) d'un roulement à billes (14) solidaire du bâti (1), en référence aux figures 1 et 2, et
- d'autre part, un mandrin (15) dont l'axe longitudinal est excentré par rapport à celui de l'arbre de pompe (3).

Un second roulement à billes (16) est monté concentriquement sur le mandrin (15) du coulisseau (11), la bague extérieure de ce second roulement à billes (16) étant en appui contre les pistons (6) radiaux de la pompe.

On notera que la longueur du coulisseau (11) est légèrement inférieure au diamètre de la bague intérieure (13) du roulement à billes (14) de sorte que ledit coulisseau (11) est apte à se déplacer depuis une position d'excentricité minimale, dans laquelle le poussoir (8) s'étend en totalité dans l'évidement (9), jusqu'à une position d'excentricité maximale dans laquelle une partie du poussoir (8) fait saillie dudit évidement (9), et inversement, comme il sera détaillé un peu plus loin.

Par ailleurs, en référence aux figures 1 et 2, le poussoir (8) consiste en une bille maintenue en contact permanent avec la bague intérieure (12) du roulement à billes (13) par un piston (17) s'étendant dans l'évidement radial (9) du coulisseau (11) et coopérant avec le moyen élastique (10). Ledit moyen élastique (10) consiste par exemple en un ressort hélicoïdal, dont la raideur est choisi par l'homme du métier..

Il est bien évident que le ressort hélicoïdal (10) peut être substitué par tout moyen élastique équivalent bien connu de l'homme du métier, et par exemple par des rondelles élastiques ou des rondelles dites de « Belleville ». Le coulisseau (11) et le poussoir (8) peuvent présenter une forme quelconque sans pour autant sortir du cadre de l'invention.

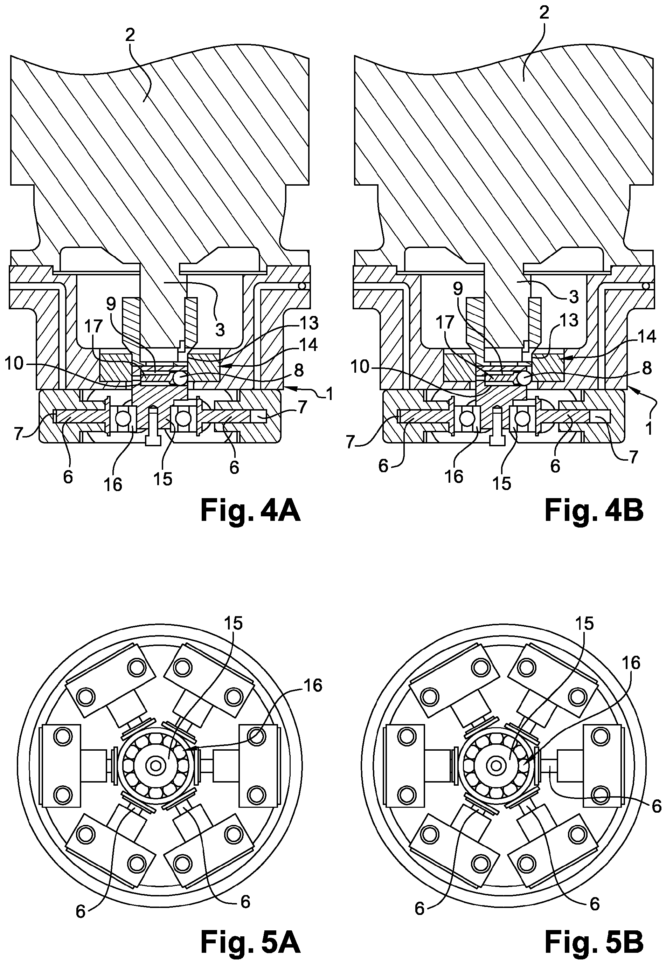

Il va maintenant être expliqué le fonctionnement de la pompe hydraulique conforme à cette première forme de réalisation, en relation avec les figures 4A,4B et 5A, 5B.

En référence aux figures 4A et 5A, le coulisseau (11) est dans une position d'excentricité minimale dans laquelle le poussoir (8) s'étend en totalité dans l'évidement (9) lorsque l'action résultante des pistons qui refoulent en pression est supérieure à celle du ressort hélicoïdal (10). De fait, la valeur initiale de ce dernier correspond à une pression de consigne, ladite pression de consigne correspondant à la pression de l'ensemble des pistons (6) et étant fixée arbitrairement.

Le ressort hélicoïdal (10) ou les moyens élastiques équivalents restent compriméd et la valeur de l'excentricité reste alors minimale jusqu'à ce que la pression régnant dans les pistons (6) devienne inférieure ou égale à la pression de consigne dépendant de la charge du circuit hydraulique aval.

Lorsque la pression régnant dans les pistons (6) est inférieure ou égale à la pression de consigne, en référence aux figures 4B et 5B, le ressort hélicoïdal (10) s'allonge jusqu'à ce qu'une partie du poussoir (8) fasse saillie dudit évidement (9) déplaçant ainsi le coulisseau (11) et, in fine, le mandrin (15) pour augmenter l'excentricité.

De cette manière, la pompe hydraulique procure une pression de charge critique, correspondant à une position d'excentricité maximale de la pompe (figures 4B, 5B), dans laquelle le débit de la pompe est maximal, puis une pression minimale correspondant à une position d'excentricité minimale (figures 4A, 5A) de la pompe dans laquelle la valeur du débit de la pompe est minimale, le débit de la pompe passant d'une valeur maximale à une valeur minimale et inversement, et ce, de manière progressive.

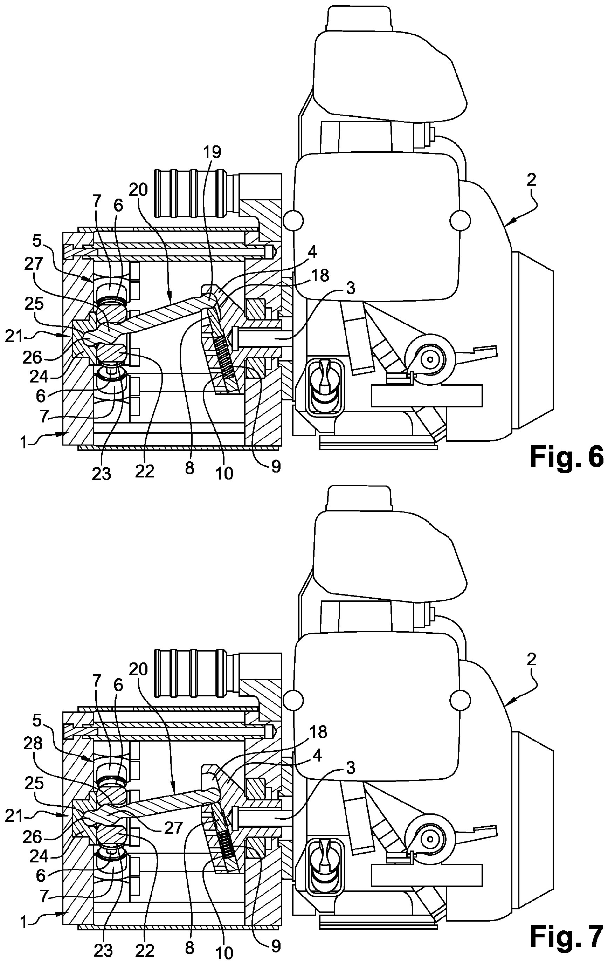

Selon une variante d'exécution de la pompe hydraulique de l'invention, en référence aux figures 6 et 7, ladite pompe comporte, de la même manière que précédemment, un bâti (1) auquel est solidarisé un moteur (2) thermique ou électrique, comprenant un arbre de sortie dit arbre de pompe (3) entraîné en rotation autour d'un axe fixe par rapport au bâti (1), un manchon excentrique (4) en prise avec l'arbre de pompe (3) et un étage (5) de pistons (6) disposés de manière fixe par rapport au bâti (1), chaque piston (6) s'étendant radialement dans un cylindre de pompe (7) définissant une chambre.

Ledit manchon excentrique (4), en référence aux figures 1 à 3, comporte un poussoir (8) s'étendant sensiblement radialement dans un évidement (9) pratiqué dans le manchon excentrique (4) et coopérant avec un moyen élastique (10) dont l'élasticité varie en fonction de la charge du circuit aval de la pompe, ledit poussoir (8) actionnant des moyens faisant varier la course des pistons (6).

Cette pompe hydraulique se distingue de la précédente par le fait que le manchon excentrique (4) comporte un évidement cylindrique (9) sensiblement radial dans lequel s'étendent le moyen élastique (10), tel qu'un ressort hélicoïdal par exemple, et le poussoir (8) qui est apte à faire saillie dans une gorge radiale excentrique (18) et qui prend appui sur la tête (19) d'un pivot (20) articulé au bâti (1) par une rotule (21). Ledit pivot (20) coopère avec une bague dite excentrée (22), dont la génératrice extérieure (23) prend appui sur les pistons (6) radiaux de la pompe.

Dans cet exemple particulier de réalisation, l'évidement cylindrique (9) forme un angle α avec l'axe radial de l'arbre de pompe (3), de préférence compris entre 5 et 45°, et le poussoir (8) consiste en un doigt sensiblement cylindrique.

Par ailleurs, la rotule (21) est constituée d'un siège (24) solidaire du bâti (1) et comprenant un évidement hémisphérique (25) dans lequel prend appui une tête sphérique (26) solidaire de l'extrémité distale du pivot (20). Ledit pivot (20) comporte à proximité de son extrémité distale une partie sphérique (27) prenant appui sur la génératrice intérieure (28) de la bague excentrée (22) qui prend également appui sur le siège (24).

Le fonctionnement de la pompe hydraulique conforme à cette seconde forme de réalisation de l'invention va maintenant être explicité en référence aux figures 6, 7 et 8A, 8B.

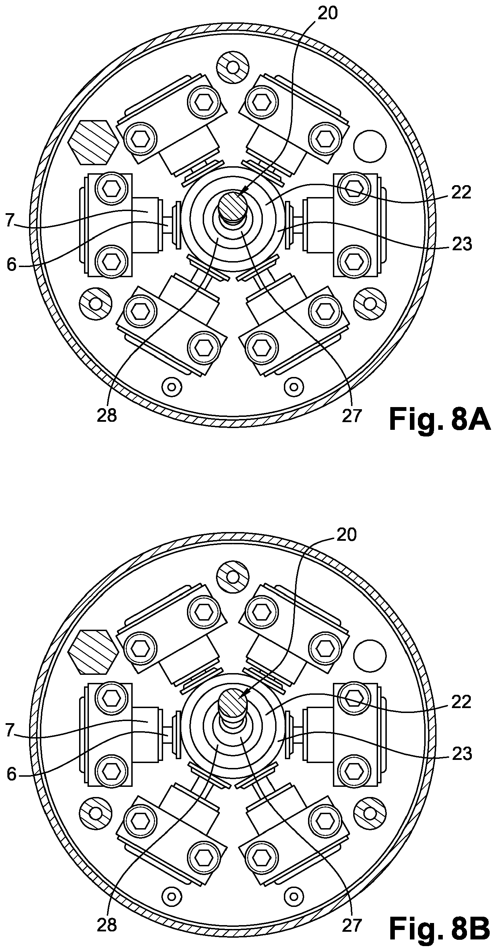

En référence aux figures 6 et 8A, le pivot (20) se trouve dans une position d'excentricité maximale dans laquelle le poussoir (8) s'étend en totalité dans la gorge radiale (18) lorsque l'action résultante des pistons qui refoulent en pression est supérieure à celle du ressort hélicoïdal (10). La valeur initiale de ce dernier correspond à une pression de consigne, ladite pression de consigne correspondant à la pression de l'ensemble des pistons (6) et étant fixée arbitrairement.

Le ressort hélicoïdal (10) reste allongé et la valeur de l'excentricité reste alors maximale jusqu'à ce que la pression régnant dans les pistons (6) devienne supérieure ou égale à la pression de consigne dépendant de la charge du circuit hydraulique aval.

Lorsque la pression régnant dans les pistons (6) est supérieure ou égale à la pression de consigne, en référence aux figures 7 et 8B, le ressort hélicoïdal (10) se comprime jusqu'à ce que le poussoir (8) s'étende en totalité dans l'évidement (9) entraînant une rotation du pivot (20) et, in fine, un déplacement de la bague excentrée (22) pour diminuer l'excentricité.

Lorsque la pression régnant dans les pistons (6) redevient inférieure ou égale à la pression de consigne, le ressort hélicoïdale s'allonge à nouveau de sorte que le poussoir (8) fait saillie dans la gorge radiale (18) pour entraîner la rotation du pivot (20) et, in fine, le déplacement de la bague excentrée dans sa position d'excentricité maximale (figures 6 et 8A).

On adapte la longueur du pivot (20) à la puissance du moteur ou au débit souhaité (notamment à haute pression).

Cette forme de réalisation présente l'avantage d'être plus économe en termes de consommation d'énergie ou en termes de dimensionnement du moteur. En effet, si l'on souhaite davantage de débit tout en conservant le moteur de base ou standard, il suffit d'augmenter la longueur du pivot (20), dont l'effort va alors être amplifié.

Enfin, il est bien évident que les exemples que l'on vient de donner ne sont que des illustrations particulières en aucun cas limitatives quant aux domaines d'application de l'invention.

## Revendications

1. Pompe radiale hydraulique comprenant au moins un bâti (1), un arbre de pompe (3) apte à être entraîné en rotation par un moteur (2) autour d'un axe fixe par rapport au bâti (1), un manchon excentrique (4) en prise avec l'arbre de pompe (3) et au moins un étage (5) de pistons (6), disposés de manière fixe par rapport au bâti (1) et s'étendant radialement dans des cylindres (7) de pompes définissant des chambres, ladite pompe comprtant au moins un poussoir (8) reçu dans un évidement (9) pratiqué dans le manchon excentrique (4) et **caractérisé en ce que** ledit poussoir (8) coopère avec au moins un moyen élastique (10) compressible, dont la longueur varie en fonction de la charge du circuit aval débouchant au niveau des chambres de pompe, ledit poussoir (8) actionnant des moyens diminuant la course des pistons (6).

2. Pompe radiale hydraulique selon la revendication 1, ***caractérisée* en ce que** le manchon excentrique (4) comporte une gorge radiale (12) formant une glissière radiale recevant un coulisseau (11) qui comprend d'une part un évidement cylindrique radial (9) dans lequel s'étendent le moyen élastique (10) et le poussoir (8), ledit évidement cylindrique (9) étant fermé par une bague intérieure (13) d'un roulement à billes (14) solidaire du bâti (1), et d'autre part, un mandrin (15) dont l'axe longitudinal est excentré par rapport à celui de l'arbre de pompe (3).

3. Pompe radiale hydraulique selon la revendication 2, ***caractérisée* en ce que** le poussoir (8) consiste en une bille maintenue en contact permanent avec la bague intérieure (13) du roulement à billes (14) par un piston (17) s'étendant dans l'évidement radial (9) du coulisseau (11) et coopérant avec le moyen élastique (10).

4. Pompe radiale hydraulique selon l'une quelconque des revendications 2 ou 3, ***caractérisée* en ce qu'**elle comporte un roulement à billes (16) monté concentriquement sur le mandrin (15) du coulisseau (11), et dont la bague extérieure est en appui contre les pistons (6) radiaux de la pompe.

5. Pompe radiale hydraulique selon la revendication 1, ***caractérisée* en ce que** le manchon excentrique (4) comporte un évidement cylindrique (9) sensiblement radial dans lequel s'étendent le moyen élastique (10) et le poussoir (8) qui fait saillie dans une gorge radiale excentrique (18) et qui prend appui sur la tête (19) d'un pivot (20) articulée au bâti (1) par une rotule (21), ledit pivot (20) coopérant avec une bague dite excentrée (22) dont la génératrice extérieure (23) prend appui sur les pistons (6) radiaux de la pompe.

6. Pompe radiale hydraulique selon la revendication 5, ***caractérisée* en ce que** le poussoir (8) consiste en un doigt sensiblement cylindrique.

7. Pompe radiale hydraulique selon l'une quelconque des revendications 5 ou 6, ***caractérisée* en ce que** l'évidement cylindrique (9) forme un angle α avec l'axe radial de l'arbre de pompe (3).

8. Pompe radiale hydraulique selon la revendication 7, ***caractérisée* en ce que** la valeur de l'angle α est comprise entre 5 et 45°.

9. Pompe radiale hydraulique selon l'une quelconque des revendications 5 à 8, ***caractérisée* en ce que** la rotule (21) est constituée d'un siège (24) solidaire du bâti (1) et comprenant un évidement hémisphérique (25) dans lequel prend appui une tête sphérique (26) solidaire de l'extrémité distale du pivot (20), ledit pivot (20) comportant à proximité de son extrémité distale une partie sphérique (27) prenant appui sur la génératrice intérieure (28) de la bague excentrée (22) qui prend appui sur le siège (24).

10. Pompe radiale selon l'une quelconque des revendications 1 à 9, ***caractérisée* en ce que** le moyen élastique (10) consiste en un ressort hélicoïdal.

## Patentansprüche

1. Radiale hydraulische Pumpe, umfassend mindestens einen Rahmen (1), eine Pumpenwelle (3), die durch einen Motor (2) um eine in Bezug auf den Rahmen (1) feste Achse gedreht werden kann, eine Exzenterhülse (4), die in die Pumpenwelle (3) greift und mindestens eine Stufe (5) mit Kolben (6), die in Bezug auf den Rahmen (1) fest angeordnet ist und radial in Pumpenzylindern (7), die Kammern definieren, verlaufen, wobei diese Pumpe mindestens einen Stößel (8) umfasst, der in einer in der Exzenterhülse ausgeführten Vertiefung (9) untergebracht ist, und **dadurch gekennzeichnet, dass** dieser Stößel (8) mit mindestens einem elastischen Mittel (10) zusammenwirkt, dessen Länge sich in Abhängigkeit vom stromabwärtigen Schaltkreis verändert, der auf Höhe der Pumpenkammern mündet, wobei dieser Stößel (8) Hilfsmittel betätigt, die den Kolbenhub (6) verringern.

2. Radiale hydraulische Pumpe gemäß Anspruch 1, ***dadurch gekennzeichnet, dass*** die Exzenterhülse (4) eine radiale Nut (12) enthält, die eine Gleitführung bildet, die einen Schieber (11) aufnehmen kann, der einerseits eine radiale, zylindrische Aussparung (9), in dem das elastische Mittel (10) und der Stößel (8) untergebracht sind, wobei diese zylindrische Aussparung (9) durch einem Innenring (13) eines fest mit dem Rahmen (1) verbundenen Kugellagers (14) verschlossen ist, und andererseits ein Futter (15) enthält, dessen Längsachse exzentrisch zu der der Pumpenwelle (3) ist.

3. Radiale hydraulische Pumpe gemäß Anspruch 2, ***dadurch gekennzeichnet, dass*** der Stößel (8) aus einer Kugel besteht, die in ständigem Kontakt mit dem Innenring (13) des Kugellagers (14) durch einen Kolben (17)gehalten wird, der in der radialen Aussparung (9) des Schiebers (11) verläuft und mit dem elastischen Mittel (10) zusammenarbeitet.

4. Radiale hydraulische Pumpe gemäß einem der Ansprüche 2 oder 3, ***dadurch gekennzeichnet, dass*** sie ein Kugellager (16) enthält, das konzentrisch auf dem Futter (15) des Schiebers (11) montiert ist, und dessen Außenring sich gegen die Radialkolben (6) der Pumpe stützt.

5. Radiale hydraulische Pumpe gemäß Anspruch 1, ***dadurch gekennzeichnet, dass*** die Exzenterhülse (4) eine deutlich radiale, zylindrische Aussparung (9) enthält, in der das elastische Mittel (10) und der Stößel (8) untergebracht sind, die in eine exzentrische radiale Nut (18) ragt und sich auf den Kopf (19) eines Zapfens (20) stützt, der am Rahmen (1) über eine Kugel (21) beweglich verbunden ist, wobei dieser Zapfen (20) mit einer sogenannten Exzenterbuchse (22) zusammenarbeitet, dessen Außengenerator (23) sich auf die Radialkolben (6) der Pumpe stützt.

6. Radiale hydraulische Pumpe gemäß Anspruch 5, ***dadurch gekennzeichnet, dass*** der Stößel (8) aus einem deutlich zylindrischen Finger besteht.

7. Radiale hydraulische Pumpe gemäß einem der Ansprüche 5 oder 6, ***dadurch gekennzeichnet, dass*** die zylindrische Aussparung (9) einen Winkel α mit der Radialachse der Pumpenwelle (3) bildet.

8. Radiale hydraulische Pumpe gemäß Anspruch 7, ***dadurch gekennzeichnet, dass*** der Wert des Winkels α zwischen 5 und 45 ° beträgt.

9. Radiale hydraulische Pumpe gemäß einem der Ansprüche 5 bis 8, ***dadurch gekennzeichnet, dass*** die Kugel (21) aus einem mit dem Rahmen (1) fest verbundenen Sitz (24) besteht, der eine hemisphärische Aussparung (25) enthält, in der ein sphärischer Kopf (26), der mit dem distalen Endstück des Zapfens (20) fest verbunden ist, aufliegt, wobei dieser Zapfen (20) in Nähe seines distalen Endstücks einen sphärischen Teil (27) enthält, der auf dem internen Generator (28) der Exzenterbuchse (22) aufliegt, die auf dem Sitz (24) aufliegt.

10. Radiale hydraulische Pumpe gemäß einem der Ansprüche 1 bis 9, ***dadurch gekennzeichnet, dass*** das elastische Mittel (10) aus einer Spiralfeder besteht.

## Claims

1. A radial hydraulic pump comprising at least a frame (1), a pump shaft (3) capable of being rotated by a motor (2) around an axis which is stationary with respect to the frame (1), an eccentric sleeve (4) engaged with the pump shaft (3), and at least one stage (5) of pistons (6), arranged to be stationary with respect to the frame (1) and radially extending in pump cylinders (7) defining chambers, said pump comprising at least one tappet (8) received in a recess (9) formed in the eccentric sleeve (4), **characterized in that** said tappet (8) cooperates with at least one compressible resilient means (10), which length varies according to the load of the downstream circuit emerging at the level of the pump chambers, said tappet (8) actuating means decreasing the stroke of the pistons (6).

2. The hydraulic pump of claim 1, wherein the eccentric sleeve (4) comprises a radial groove (12) forming a radial slide rail receiving a slide (11) which comprises, on the one hand, a radial cylindrical recess (9) having the resilient means (10) and the tappet (8) extending therein, said cylindrical recess (9) being closed by an inner race (13) of a ball bearing (14) solidly attached to the frame (1) and, on the other hand, a mandrel (15) having its longitudinal axis offset with respect to that of the pump shaft (3).

3. The hydraulic radial pump of claim 2, wherein the tappet (8) is formed of a ball maintained in permanent contact with the inner race (13) of the ball bearing (14) by a piston (17) extending in the radial recess (9) of the slide (11) and cooperating with the resilient means (10).

4. The radial hydraulic pump of any of claims 2 or 3, comprising a ball bearing (16) concentrically assembled on the mandrel (15) of the slide (11), and having its outer race bearing against the radial pistons (6) of the pump.

5. The radial hydraulic pump of claim 1, wherein the eccentric sleeve (4) comprises a substantially radial cylindrical recess (9) in which extend the resilient means (10) and the tappet (8), which protrudes in an eccentric radial groove (18) and which bears against the head (19) of a pivot (20) jointed to the frame (1) by a swivel (21), said pivot (20) cooperating with an eccentric bush (22) having its cone distance (23) bearing against the radial pistons (6) of the pump.

6. The radial hydraulic pump of claim 5, wherein the tappet (8) is a substantially cylindrical finger.

7. The radial hydraulic pump of any of claims 5 or 6, wherein the cylindrical recess (9) forms an angle α with the radial axis of the pump shaft (3).

8. The radial hydraulic pump of claim 7, wherein the value of angle α ranges between 5 and 45°.

9. The radial hydraulic pump of any of claims 5 to 8, wherein the swivel (21) is formed of a seat (24) solidly attached to the frame (1) and comprising a hemispherical recess (25) having a spherical head (26) solidly attached to the distal end of the pivot (20) bearing inside of it, said pivot comprising, close to its distal end, a spherical portion (27) bearing on the inner cone distance (28) of the eccentric bush (22) which bears on the seat (24) .

10. The radial pump of any of claims 1 to 9, wherein the resilient means (10) are formed of a helical spring.
